## Europäisches Patentamt
## European Patent Office
## Office européen des brevets

(11) Veröffentlichungsnummer: **0 072 460**
A1

# EUROPÄISCHE PATENTANMELDUNG

(21) Anmeldenummer: 82106748.5

(22) Anmeldetag: 26.07.82

(51) Int. Cl.³: **H 02 K 21/08**
**H 02 K 21/46**

(30) Priorität: 19.08.81 US 294284
19.08.81 US 294362
19.08.81 US 294285

(43) Veröffentlichungstag der Anmeldung:
23.02.83 Patentblatt 83/8

(84) Benannte Vertragsstaaten:
DE FR

(71) Anmelder: SIEMENS-ALLIS, INC.
223 Perimeter Center Parkway
Atlanta Georgia 30338(US)

(72) Erfinder: Liu, Joseph Ching-Chio
14501 Sara Lynn Drive
Little Rock Arkansas 72206(US)

(72) Erfinder: Wagner, Paul Dieter
549 Ludlow Avenue
Cincinnati Ohio 45220(US)

(72) Erfinder: Keuper, John Joseph
7 Alanna Drive
Cold Spring Kentucky 41076(US)

(74) Vertreter: Mehl, Ernst, Dipl.-Ing. et al,
Postfach 22 01 76
D-8000 München 22(DE)

(54) Dauermagneterregter Läufer für eine Synchronmaschine.

(57) Die Erfindung betrifft einen dauermagneterregten Läufer (1) für eine Synchronmaschine, der ein geschichtetes Blechpaket aufweist, dessen einzelne Blechlamellen (2) aus einem inneren, eine Bohrung (4) für die Läuferwelle (3) aufweisenden Blechteil (10) und einem äußeren, Nuten (5) für die Läuferstäbe (6) aufweisenden Blechteil (11) bestehen. Ferner sind zwischen den beiden Blechteilen (10 und 11) parallel zu an die Läuferwelle (3) angelegten Tangenten verlaufende Schlitze (8 bzw. 20 bis 23) zur Aufnahme von Dauermagneten (13) vorgesehen. Die inneren und äußeren Blechteile (10 und 11) sind über angestanzte, sich zwischen den Schlitzen (8 bzw. 20 bis 23) erstreckende Stege (9 bzw. 24 und 25) miteinander verbunden. Um bei gleicher Baugröße des Motors eine höhere Leistung zu erzielen, sind im Bereich der neutralen Zone sich zwischen den Nuten (5) bis nahe an den Umfangsrand der Blechlamellen (2) erstreckende Radialschlitze (12 bzw. 26, 27 bzw. 36, 37) vorgesehen. In diesen Radialschlitzen sind ebenfalls Dauermagnete (13 bzw. 30) mit der gleichen Polrichtung wie in den angrenzenden Schlitzen (8 bzw. 20 bis 23) angeordnet.

FIG 1

SIEMENS-ALLIS, INC.
Atlanta, Georgia 30338

Unser Zeichen
VPA 81 P 8586 E

## Dauermagneterregter Läufer für eine Synchronmaschine

Die Erfindung bezieht sich auf einen dauermagneterregten Läufer für eine Synchronmaschine, der ein geschichtetes Blechpaket aufweist, dessen einzelne Blechlamellen aus einem inneren, eine Bohrung für die Läuferwelle aufweisenden Blechteil und einem äußeren, Nuten für die Läuferstäbe aufweisenden Blechteil bestehen, bei dem ferner zwischen den beiden Blechteilen parallel zu an die Läuferwelle angelegten Tangenten verlaufende Schlitze zur Aufnahme von Dauermagneten vorgesehen und die beiden Blechteile über angestanzte, sich zwischen den Schlitzen erstreckende Stege miteinander verbunden sind.

Ein solcher dauermagneterregter Läufer ist durch die US-PS 41 39 790 bekannt. Bei diesem Läufer sind zur Vermeidung eines magnetischen Kurzschlusses zwischen den ungleichnamigen Polen zu beiden Seiten der neutralen Zone Flußsperren ausgebildet. Diese Flußsperren werden durch von den die Magnete aufnehmenden Schlitzen ausgehende und sich bis zum Umfangsrand des Läuferpaketes erstreckende Ausnehmungen gebildet. Diese Ausnehmungen sind mit den gleichem amagnetischem Material, aus dem auch die Läuferstäbe bestehen, ausgegossen. Zwischen den Ausnehmungen befinden sich relativ lange schmale Verbindungsstege, welche die beiden Blechteile verbinden. Diese Verbindungsstege sind aufgrund ihrer geometrischen Ausbildung anfällig für Beschädigungen während des Stanz- und Paketiervorganges.

Aufgabe der Erfindung ist es, einen solchen Motor so weiterzubilden, daß bei gleicher Baugröße des Motors eine höhere Leistung erzielt wird.

M1 2 Ca / 01.07.1982

Die Lösung der gestellten Aufgabe gelingt nach der Erfindung dadurch, daß im Bereich der neutralen Zone sich zwischen den Nuten bis nahe an den Umfangsrand der Blechlamellen erstreckende Radialschlitze vorgesehen sind, in denen ebenfalls Dauermagnete in der gleichen Polrichtung wie in den angrenzenden Schlitzen angeordnet sind. Die in den Radialschlitzen eingefügten Dauermagnete verhindern einerseits einen magnetischen Kurzschluß zwischen den jeweils aneinanderstoßenden Polen unterschiedlicher Polarität, andererseits addiert sich der von ihnen ausgehende magnetische Fluß zu dem magnetischen Fluß der übrigen Dauermagnete. Dadurch weist der neue Läufer gegenüber dem bekannten Läufer bei gleicher Baugröße einen höheren Fluß auf, woraus die größere Leistung des neuen Motors resultiert.

Dadurch, daß die Radialschlitze die gleiche Größe wie die übrigen Schlitze haben und in alle Schlitze Magnetblöcke gleicher Größe eingesetzt sind, ergibt sich eine wirtschaftliche Fertigung des Läufers.

Eine Erhöhung der mechanischen Festigkeit des Läuferblechpaketes wird dadurch erreicht, daß die Radialschlitze in dem zwischen die Schlitze ragenden Bereich im spitzen Winkel auslaufen und zwischen den schräg verlaufenden Kanten der Radialschlitze und den Seitenkanten der benachbarten Schlitze schmale, die beiden Blechteile verbindende Querstege gebildet sind. Die Querstege stellen eine zusätzliche Verbindung zwischen dem inneren und äußeren Blechteil dar, so daß eine höhere mechanische Belastung durch die Fliehkräfte von dem Läuferpaket ausgehalten wird. Dies ist wichtig, da derartige Motoren mit Drehzahlen bis zu 10.000 U/min und darüber betrieben werden.

Anhand eines in der Zeichnung dargestellten Ausführungsbeispiels wird der Anmeldungsgegenstand nachfolgend näher beschrieben. Es zeigt jeweils im Querschnitt

Fig. 1 einen vierpoligen Läufer,

Fig. 2 einen zweipoligen Läufer mit symmetrisch zur
Wellenbohrung angeordneten Dauermagneten und

Fig. 3 einen zweipoligen Läufer mit einseitig zur Wellenbohrung angeordneten Dauermagneten.


Mit 1 ist in der Zeichnung jeweils ein dauermagneterregter
Läufer bezeichnet, der aus einem aus einzelnen Blechlamellen
geschichteten und auf einer Läuferwelle 3 angeordneten
Blechpaket besteht. In der Mitte der Blechlamellen 2 ist
eine zentrale Bohrung 4 zur Aufnahme der Läuferwelle vorgesehen. Am Rand der Blechlamellen 2 sind Nuten 5 ausgestanzt und mit Aluminium ausgegossen, so daß die Läuferstäbe 6 gebildet sind. An den beiden Stirnseiten des Blechpaketes sind die Läuferstäbe 6 über Kurzschlußringe miteinander verbunden. Die Blechlamellen 2 des Läuferblechpaketes
werden durch Nieten 7 zusammengehalten.


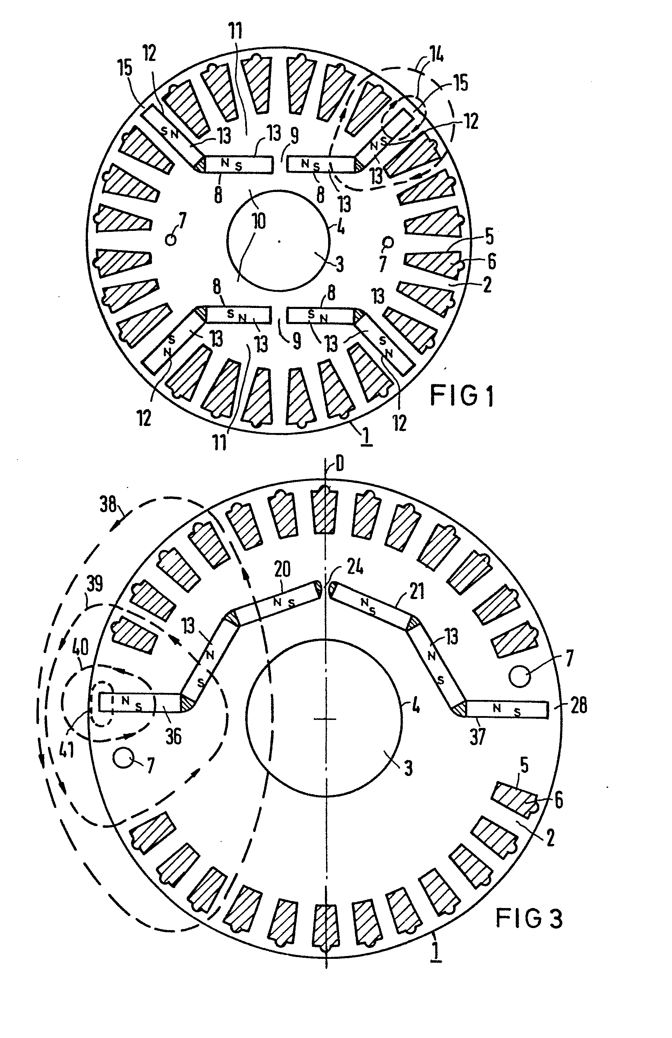

Bei dem in Fig. 1 dargestellten vierpoligen Läufer sind auf
zwei Seiten der Bohrung 4 einander gegenüberliegend jeweils
zwei Schlitze 8 ausgestanzt. Zwischen den Schlitzen 8 ist
ein Steg 9 angestanzt, der den durch die Schlitze 8 gebildeten inneren und äußeren Blechteil 10 und 11 verbindet. Am
äußeren Ende der Schlitze 8 schließt jeweils ein sich bis
nahe zum Umfangsrand der Blechlamellen 2 erstreckender
Radialschlitz an. Die Radialschlitze 12 erstrecken sich
entlang dem in der neutralen Zone liegenden Radius des
Blechpaketes. Die Radialschlitze 12 sind bei dem in Fig. 1
dargestellten Läufer in Umfangsrichtung jeweils um 90°
gegeneinander versetzt. Dadurch ist der Läufer 1 in vier
gleiche Abschnitte unterteilt.


Sowohl in die Schlitze 8 als auch in die Radialschlitze 12
sind Dauermagnete 13 eingesetzt, wobei die Dauermagnete 13
in den einander gegenüberliegenden Schlitzen 8 mit umgekehrter Polarität angeordnet sind. In den an die Schlitze 8 angrenzenden Radialschlitzen 12 sind die Dauermagnete jeweils mit der gleichen Polarität wie in den betreffenden Schlitzen 8 angeordnet. Dadurch wird erreicht, daß die aufeinanderfolgenden Abschnitte der Polarität abwechseln und somit vier Pole bilden.

Durch gestrichelte Linien 14 ist im Bereich eines Radialschlitzes 12 der Verlauf des magnetischen Flusses angedeutet. Wie daraus zu ersehen ist, schließt sich der wesentliche Teil des Flusses über den Luftspalt und den Ständer und trägt somit zum Arbeitsfluß der Maschine bei. Lediglich über den dünnen Materialstreifen 15 zwischen dem Umfangsrand des Blechpaketes und dem Ende der Radialschlitze 12 besteht für den magnetischen Fluß ein Kurzschlußweg. Wegen der geringen Breite gelangt dieser Materialstreifen bald in Sättigung und stellt dann einen hohen Widerstand für den magnetischen Fluß dar. Daher wird nur ein vernachlässigbarer Teil des Flusses über den Materialstreifen 15 kurzgeschlossen. Der übrige von den in den Radialschlitzen 12 angeordneten Dauermagneten ausgehende Fluß schließt sich, wie bereits erwähnt, über den Luftspalt und Ständer und trägt somit zum Nutzfluß bei. Durch die in den Radialschlitzen 12 eingefügten Dauermagnete 13 wird das wirksame Magnetvolumen wesentlich vergrößert.

Die Schlitze 8 und die Radialschlitze 12 sind in ihrer Länge gleich groß bemessen, so daß in alle Schlitze Magnete gleicher Größe eingesetzt werden können. Dadurch ergibt sich eine wirtschaftliche Fertigung des Läufers. Als besonders vorteilhaft haben sich Selten-Erde-Magnete, z.B. Samarium-Kobalt-Magnete erwiesen. Da diese Magnete sehr teuer sind, ist deren Einsatz nur dann wirtschaftlich, wenn das Magnetmaterial gut ausgenutzt wird. Dies trifft bei dem beschriebenen Läufer zu.

Wie die Darstellung in Fig. 1 ferner zeigt, sind durch die einander gegenüberliegende Anordnung der Schlitze 8 und der in diesen eingesetzten Dauermagnete 13 sowie die an die Schlitze 8 anschließenden Radialschlitze 12 nur zwei Gruppen von Dauermagneten 13 zur Bildung eines vierpoligen Läufers notwendig.

Vergleichsmessungen zwischen einem Läufer gemäß dem Stand der Technik und einem nach der Erfindung ausgebildeten Läufer haben folgende Werte ergeben:

Tabelle 1

|  | Läufer nach Fig. 1 | Läufer Stand der Technik |
|---|---|---|
| Läufervolumen | 728 cm$^3$ | 515 cm$^3$ |
| Magnetfläche/Pol | 28,6 cm$^2$ | 18,2 cm$^2$ |
| Magnetvolumen/Pol | 10,7 cm$^3$ | 13,9 cm$^3$ |
| Vollastmoment | 0,404 mkp | 0,296 mkp |
| Kippmoment | 165 % | 150 % |
| Vollaststrom | 2,41 A | 2,01 A |
| cos $\varphi$ | 0,94 | 0,91 |
| Wirkungsgrad $\eta$ | 82,5 % | 74,9 % |
| cos $\varphi \cdot \eta$ | 0,777 | 0,684 |
| Synchronisiermoment | 0,191 mkp | 0,036 mkp |

Wie die aufgeführten Werte zeigen, ist das Volumen des erfindungsgemäßen Läufers zwar um ca. 41 % größer als das Volumen des bekannten Läufers. Die Magnetfläche pro Pol ist jedoch um ca. 57 % größer als beim Läufer nach dem Stand der Technik. Das tatsächliche Magnetvolumen ist bei dem erfindungsgemäßen Läufer trotz des größeren Läufervolumens jedoch kleiner. Ferner zeigt sich, daß bei einem mit einem erfindungsgemäßen Läufer ausgerüsteten Motor sowohl das Vollastmoment als auch das Kipp- und Synchronisiermoment zum Teil erheblich größer sind als bei einem Motor mit einem Läufer gemäß dem Stand der Technik. Ein mit dem erfindungsgemäßen Läufer ausgestatteter Motor zeigt also trotz geringerem Magnetvolumen ein besseres Leistungsverhalten.

Die Ausbildung von nur zwei zur Wellenbohrung gegenüberliegenden Schlitzgruppen hat den Vorteil, daß die einzelnen
Blechlamellen 2 eine höhere mechanische Festigkeit aufweisen.
Das gesamte Blechpaket kann damit einer höheren Fliehkraftbeanspruchung besser standhalten.

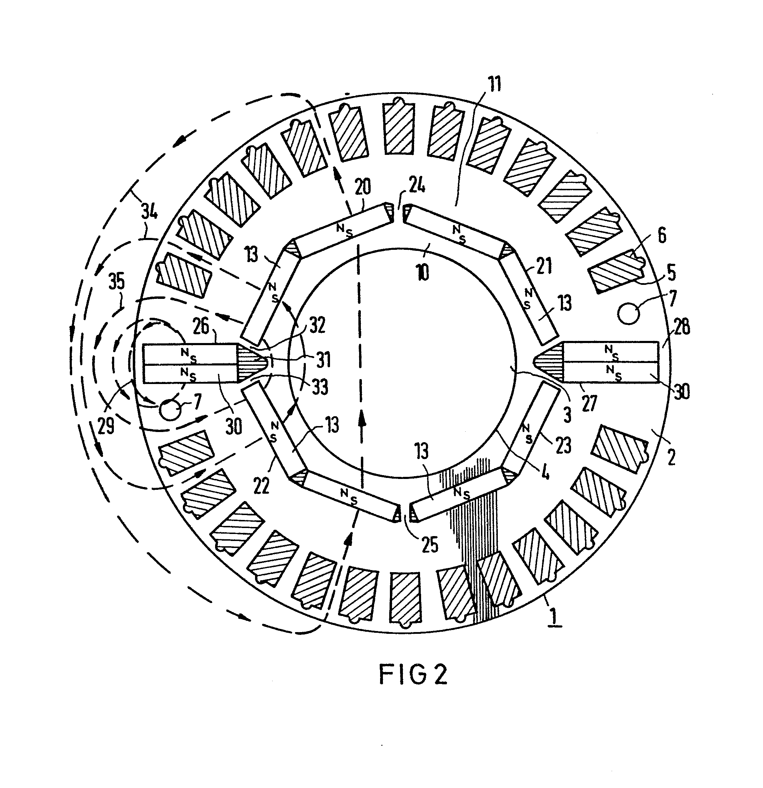

Bei dem in Fig. 2 dargestellten zweipoligen Läufer sind zwei
erste Schlitzpaare 20/21 bogenförmig um die Läuferbohrung 4
angeordnet. Zwei zweite Schlitzpaare 22/23 sind den ersten
Paaren gegenüberliegend um die Läuferbohrung 4 gruppiert.
In die Schlitze sind wiederum Dauermagnete eingesetzt, wobei
die Polarität der in die ersten Schlitzpaare 20/21 eingesetzten Dauermagnete gegenüber der Polarität der in die
zweiten Schlitzpaare 22/23 eingesetzten Dauermagnete umgekehrt ist. Zwischen den jeweiligen Schlitzpaaren sind Stege
24 und 25 an den Blechlamellen 2 angestanzt, welche die
inneren und äußeren Blechteile 10 und 11 verbinden. Da die
Schlitze nur eine geringe Höhe aufweisen, sind die Stege 24
und 25 entsprechend kurz und damit besonders widerstandsfähig, so daß sie den Beanspruchungen beim Stanzen und
Paketieren standhalten.

Ein drittes Paar von Schlitzen 26 und 27 ist entlang dem in
der neutralen Zone liegenden Durchmesser angeordnet, wobei
sich diese Schlitze etwa von der Umfangslinie der beiden
anderen Schlitzpaare ausgehend bis nahe zum Umfangsrand der
Blechlamellen 2 erstrecken. Diese sich radial erstreckenden
Schlitze 26 und 27 sind vorzugsweise doppelt so dick wie die
anderen Schlitze 20 bis 23. Zwischen dem Schlitzende und dem
Umfangsrand verbleibt nur ein schmaler Materialstreifen 28,
der so bemessen ist, daß er den auftretenden mechanischen
Kräften standhält. Ein kleiner Teil des Flusses wird zwangsweise über den Materialstreifen 28 kurzgeschlossen, wie durch
eine strichlierte Flußlinie 29 angedeutet ist. Da der Streifen schnell in Sättigung geht, ist der Betrag des kurzgeschlossenen Flusses gering.

Die in die Schlitze 26 und 27 eingesetzten Dauermagnete 30 haben die gleiche Größe wie die in die übrigen Schlitze 20 bis 23 eingesetzten Dauermagnete. In den Schlitzen 26 und 27 sind lediglich jeweils zwei Dauermagnete übereinandergeschichtet.

An dem radial innenliegenden Ende laufen die Schlitze 26 und 27 in einem dreieckförmigen Zwickel 31 aus. Diese Zwickel 31 ragen zwischen die beiden bogenförmig angeordneten Schlitzpaare 20/21 und 22/23. Die Seitenkanten der Zwickel 31 verlaufen parallel zu den Querkanten der Schlitze 20/22 und 21/23, so daß weitere, die inneren und äußeren Blechteile 10 und 11 verbindende Querstege 32 und 33 gebildet sind.

Die in den drei Schlitzpaaren 20/21; 22/23 und 26/27 angeordneten Dauermagnete erzeugen einen durch gestrichelte Linien 34 und 35 angedeuteten magnetischen Fluß. Die in dem dritten Schlitzpaar 26/27 angeordneten Dauermagnete 30 bilden gleichzeitig eine Sperre, die den Fluß an einem vorzeitigen Wiedereintritt in den Läuferkörper hindert. Wenn man die linke Läuferhälfte betrachtet, dann wird der von dem in dem Schlitzpaar 20 angeordneten Dauermagneten ausgehende Fluß durch die in dem Schlitz 26 angeordneten Dauermagnete 30 an dem vorzeitigen Wiedereintritt in den Läuferkörper im Bereich der neutralen Zone gehindert. Der Fluß wird vielmehr durch diese Dauermagnete 30 gezwungen, seinen Weg über den Luftspalt und den Ständer zum anderen Pol (Südpol) des Läufers 1 zu nehmen. Nur über den Materialstreifen 28 schließt sich ein geringer Teil des Flusses kurz.

Bei der in Fig. 2 dargestellten Ausführungsform ergibt sich eine besonders große Magnetfläche je Pol.

Die in Fig. 3 dargestellte weitere Ausführungsform eines zweipoligen Läufers weist ein nur einseitig zur Bohrung 4 bogenförmig angeordnetes Schlitzpaar 20/21 auf. Im Anschluß an die Schlitze 20 und 21 erstrecken sich parallel zur Durchmesserlinie der neutralen Zone zwei Radialschlitze 36 und 37, in denen ebenfalls Dauermagnete der gleichen Polarität wie in den angrenzenden Schlitzen 20 und 21 angeordnet sind. Alle Dauermagnete sind in der Richtung ihrer kürzeren Achse magnetisiert, so daß die gleichnamigen Pole in eine gemeinsame Richtung weisen. Dadurch ergibt sich zur Polmittellinie D eine symmetrische Flußverteilung, die durch die gestrichelten Linien 38 bis 41 angedeutet ist.

Obwohl bei dem in Fig. 3 dargestellten Läufer 1 nur die halbe Anzahl Dauermagnete wie bei dem in Fig. 2 dargestellten Läufer 1 vorgesehen ist, vermindert sich das Nennmoment eines solchen Läufers nicht um 50 %. Messungen eines Läufers nach Fig. 2 und 3 ergaben folgende Werte:

Tabelle 2

|  | Läufer nach Fig. 2 | Läufer nach Fig. 3 |
|---|---|---|
| Vollaststrom | 0,144 mkp | 0,081 mkp |
| Nennstrom | 4,53 A | 2,83 A |
| cos $\varphi$ | 0,903 | 0,9 |
| Wirkungsgrad $\eta$ | 80,6 % | 72,8 % |
| Synchronisiermoment | 0,045 mkp | 0,065 mkp |
| Kippmoment | 150 % | 150 % |
| Magnetvolumen | 36 cm$^3$ | 18 cm$^3$ |
| Magnetvolumen/Moment | 250 cm$^3$/mkp | 222 cm$^3$/mkp |

Diese Werte zeigen, daß sich das Vollastmoment eines Läufers nach Fig. 3 trotz Halbierung des Magnetvolumens gegenüber einem Läufer nach Fig. 2 nicht um 50 % vermindert, sondern nur um ca. 44 %. Das Synchronisiermoment steigt sogar an.

Der Fachmann hat somit die Möglichkeit, durch die entsprechende Bestückung des Läufers mit Dauermagneten den Motor für spezielle Anwendungsfälle auszulegen.

Patentansprüche

1. Dauermagneterregter Läufer für eine Synchronmaschine, der ein geschichtetes Blechpaket aufweist, dessen einzelne Blechlamellen aus einem inneren, eine Bohrung für die Läuferwelle aufweisenden Blechteil und einem äußeren, Nuten für die Läuferstäbe aufweisenden Blechteil bestehen, bei dem ferner zwischen den beiden Blechteilen parallel zu an die Läuferwelle angelegten Tangenten verlaufende Schlitze zur Aufnahme von Dauermagneten vorgesehen und die beiden Blechteile über angestanzte, sich zwischen den Schlitzen erstreckende Stege miteinander verbunden sind, d a - d u r c h   g e k e n n z e i c h n e t , daß im Bereich der neutralen Zone sich zwischen den Nuten (5) bis nahe an den Umfangsrand der Blechlamellen (2) erstreckende Radialschlitze (12 bzw. 26/27 bzw. 36, 37) vorgesehen sind, in denen ebenfalls Dauermagnete (13 bzw. 30) mit der gleichen Polrichtung wie in den angrenzenden Schlitzen (8 bzw. 20 bis 23) angeordnet sind.

2. Läufer nach Anspruch 1, d a d u r c h   g e k e n n - z e i c h n e t , daß die Radialschlitze (12 bzw. 26 und 27) symmetrisch zur Mitte der neutralen Zone angeordnet sind.

3. Läufer nach Anspruch 1 oder 2, d a d u r c h   g e - k e n n z e i c h n e t , daß die Radialschlitze (12 bzw. 26, 27 bzw. 36, 37) die gleiche Größe wie die übrigen Schlitze (8  bzw. 20 bis 23) haben.

4. Läufer nach Anspruch 3, d a d u r c h   g e k e n n - z e i c h n e t , daß in alle Schlitze (8 bzw. 20 bis 23) Dauermagnete (13 bzw. 30) gleicher Größe eingesetzt sind.

5. Läufer nach einem der vorhergehenden Ansprüche, d a - d u r c h   g e k e n n z e i c h n e t , daß die Radial- schlitze (26, 27) in dem zwischen die Schlitze (20, 22 bzw. 21, 23) ragenden Bereich in spitzem Winkel auslaufen und zwischen den schräg verlaufenden Kanten der Radialschlitze (25 und 27) und den Seitenkanten der benachbarten Schlitze (20, 22 und 21, 23) schmale, die beiden Blechteile verbindende Querstege (32, 33) gebildet sind.

6. Läufer nach Anspruch 1, 3 oder 4, d a d u r c h   g e - k e n n z e i c h n e t , daß bei nur einseitig zur Bohrung(4) der Läuferwelle (3) angeordneten Dauermagneten (13) die Radialschlitze (36 und 37) auf der gleichen Seite einseitig zur Mitte der neutralen Zone angeordnet sind.

FIG 1

FIG 3

FIG 2

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | H 02 K 21/08 |
| Y | DE-B-1 203 378 (ALLIS-CHALMERS) * Spalte 4, Zeilen 51-63; Spalte 5, Zeilen 63-68; Spalte 6, Zeilen 1-68; Spalte 7, Zeilen 1-44; Figuren 4-8 * | 1-3 | H 02 K 21/46 |
| | --- | | |
| Y | DE-A-2 142 466 (SIEMENS) * Seite 2, Zeilen 5-34; Seite 3, Zeilen 1-10; Figuren 1-3 * | 1,2 | |
| | --- | | |
| A | DE-A-1 513 756 (CONTINENTAL ELEKTROINDUSTRIE, SCHORCH-WERKE) * Seite 2, Zeilen 7-33; Seite 3, Zeilen 1-7; Figuren 1,3,5 * | 1-4 | |
| | --- | | |
| A | CH-A- 470 794 (LICENTIA) * Spalte 5, Zeilen 37-42; Spalte 8, Zeilen 28-55; Figur 6 * | 1-3 | RECHERCHIERTE SACHGEBIETE (Int. Cl. ³) |
| | --- | | |
| A | DE-A-1 488 733 (SIEMENS) * Seite 6, Zeilen 3-6; Figur 3 * | 4,6 | H 02 K |
| | --- | | |
| A | US-A-2 913 607 (DOUGLAS) * Spalte 6, Zeilen 12-30; Spalte 6, Zeilen 72-75; Spalte 7, Zeilen 1-12; Figuren 4,7 * | 5 | |
| | --- | | |
| A | US-A-4 324 996 (ADELSKI) * Spalte 2, Zeilen 52-68; Spalte 3, Zeilen 1-34; Figur * | 6 | |
| | --- | -/- | |

Der vorliegende Recherchenbericht wurde für alle Patentansprüche erstellt.

| Recherchenort DEN HAAG | Abschlußdatum der Recherche 19-11-1982 | Prüfer TIO K.H. |
|---|---|---|

**Europäisches Patentamt**

**EUROPÄISCHER RECHERCHENBERICHT**

**0072460**
Nummer der Anmeldung

EP 82 10 6748

| EINSCHLÄGIGE DOKUMENTE | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| D,A | US-A-4 139 790 (STEEN)<br>* Figuren 3,7-9,11 *<br><br>----- | 1 | |
| | | | RECHERCHIERTE SACHGEBIETE (Int. Cl. ³) |
| Der vorliegende Recherchenbericht wurde für alle Patentansprüche erstellt. | | | |

| Recherchenort<br>DEN HAAG | Abschlußdatum der Recherche<br>19-11-1982 | Prüfer<br>TIO K.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82